Europäisches Patentamt

European Patent Office

Office européen des brevets

(19)

(11) **EP 1 048 366 B1**

(12) **EUROPEAN PATENT SPECIFICATION**

(45) Date of publication and mention
of the grant of the patent:
**12.10.2005 Bulletin 2005/41**

(51) Int Cl.⁷: **B09B 3/00**, B09C 1/06,
F23G 5/00

(21) Application number: **00107982.1**

(22) Date of filing: **18.04.2000**

(54) **A method for disposing a waste**

Verfahren zur Entsorgung von Abfällen

Procédé d' élimination de déchets

(84) Designated Contracting States:
**FR GB**

(30) Priority: **27.04.1999 JP 11973699
14.01.2000 JP 2000006571**

(43) Date of publication of application:
**02.11.2000 Bulletin 2000/44**

(73) Proprietor: **JFE Engineering Corporation
Tokyo (JP)**

(72) Inventors:
 • **Shimizu, Tohru, c/o NKK Corp., Int.Prop.Dept.
Kawasaki 210-0855 (JP)**
 • **Hirayama, Atsushi
Kawasaki-ku, Kawasaki 210 (JP)**
 • **Hamaguchi, Keizo
Kawasaki-ku, Kawasaki 210 (JP)**
 • **Nakahara, Keisuke
Kawasaki-ku, Kawasaki 210 (JP)**
 • **Shinagawa, Takuya
Kawasaki-ku, Kawasaki 210 (JP)**
 • **Fujisawa, Yoshinari
Kawasaki-ku, Kawasaki 210 (JP)**
 • **Osada, Yo, c/o NKK Corp.,Int.Prop.Dept.
Kawasaki 210-0855 (JP)**
 • **Yokoyama, Takashi
Kawasaki-ku, Kawasaki 210 (JP)**
 • **Suzuki, Yasuo
Kawasaki-ku, Kawasaki 210 (JP)**
 • **Akiyama, Hajime
Kawasaki-ku, Kawasaki 210 (JP)**
 • **Ayukawa, Susumu
Kawasaki-ku, Kawasaki 210 (JP)**

(74) Representative: **HOFFMANN EITLE
Patent- und Rechtsanwälte
Arabellastrasse 4
81925 München (DE)**

(56) References cited:
**WO-A-90/04470**           **WO-A-97/37784**
**US-A- 4 977 839**         **US-A- 5 688 335**

 • **TROXLER W L ET AL: "TREATMENT OF
NONHAZARDOUS
PETROLEUM-CONTAMINATED SOILS BY
THERMAL DESORPTION TECHNOLOGIES"
JOURNAL OF THE AIR AND WASTE
MANAGEMENT ASSOCIATION, AIR AND
WASTE MANAGEMENT ASSOCIATION,
PITTSBURGH, US, vol. 43, no. 11, 1 November
1993 (1993-11-01), pages 1512-1525,
XP000403301 ISSN: 1047-3289**
 • **PATENT ABSTRACTS OF JAPAN vol. 1995, no.
09, 31 October 1995 (1995-10-31) & JP 07 155722
A (NKK CORP), 20 June 1995 (1995-06-20)**

**Description**

BACKGROUND OF THE INVENTION

Field of the Invention

The present invention relates to a method for disposing a waste, particularly to a method for disposing a waste consisting mainly of inorganic matter and containing toxic organic matter.

Description of the Related Arts

A waste consisting mainly of inorganic matter, such as incineration residue, contaminated soil, and adsorption treatment residue, may contain toxic organic matter such as chloroform, dioxins, PCBs, organic phosphorus compounds, and organic metal compounds, or their precursors. The waste containing those kinds of toxic organic matter or their precursors are generally detoxified by either chemical treatment or heat treatment.

US-A-4,977,839 describes a method for separating chemical contaminants being present in inert materials such as soils or sludges. The method according to US-A-4,977,839 comprises the step of subjecting these materials to a temperature being effective to volatilize the contaminants with a continuous removal of evolved vapors. These evolved vapors may be subjected to a catalytic oxidation to destroy the volatilized chemical compounds.

Furthermore, Troxler W L et al. describes the treatment of non-hazardous petroleum-contaminated soils by thermal desorption technologies. According to the essay titled "treatment of non-hazardous petroleum-contaminated soils by thermal desorption technologies", issued in the journal of the Air & Waste Management Association, Air & Waste Management Association, Pittsburgh, US, Vol. 43, No. 11, a contaminated soil is heated and organic contaminants are volatilized into an exhaust gas. These volatilized organic contaminants are removed from a heating chamber and a gaseous exhaust stream. This exhaust stream conveys the contaminants to an exhaust gas treatment system, where it is further processed, for example in an afterburner or collected by a physical/chemical treatment system.

Japanese Patent Publication No. JP 6038863B and Japanese Patent Publication No. JP 2078479 disclose methods for treating toxic organic matter existing in incineration ash, particularly in incineration fly ash, generated from a waste incinerator. According to the former patent disclosure, the fly ash coming from an incineration plant is directly heated in a non-steady flow system to decompose polyhalogenide compounds in an oxygen deficient atmosphere. In this case, 'a non-steady flow system' means an unsteady flow system coming into outside, from a furnace to a stack in the waste incineration plant. According to the latter patent disclosure, a heating means is provided to a retention section filled with incineration fly ash, thus heating the fly ash to the temperatures degree of 300°C or more to decompose dioxins, followed by quenching the fly ash. Other than those methods, there are known chemical decomposition methods such as fusion (melting) treatment and oxidizing decomposition under a supercritical water condition.

These methods have, however, problems. For example, when the above-described waste is treated by oxidation decomposition or dechlorination using chemicals under supercritical water conditions, large amount of chemicals is necessary, which generally increases the treatment cost.

On the other hand, when the above-described waste is combusted or fused (melted), the waste is able to be treated without consuming chemicals and other materials. For example, a detoxification treatment by combustion is carried out, using a kiln or a fluidized bed by heating the waste to temperature degree of from about 800 to about 1200°C, while supplying oxygen.

According to the method, when the waste contains organic matter at a high concentration level, self-combustion and heat recovery are available, thus the waste is detoxified at a relatively low treatment cost. When, however, a waste consisting mainly of inorganic matter is treated by this method, low concentration of organic matter inhibits an efficient operation of self-combustion and heat recovery. In addition, when air is supplied for combusting the waste conforming to this method, a large amount of flue gas is emitted, which induced a problem of generation of $NO_x$.

SUMMARY OF THE INVENTION

An object of the present invention is to provide a method for disposing a waste consisting mainly of inorganic matter and containing organic matter by detoxifying thereof at a low cost. 'Detoxify' means 'making a waste harmless', hereinafter.

Another object of the present invention is to provide a method for disposing a waste consisting mainly of inorganic matter and containing organic matter by detoxifying thereof without generating large amount of flue gas and $NO_x$.

To achieve the above-described objects, the present invention provides a method for disposing a waste comprising the steps of: volatilizing toxic organic matter from a waste consisting mainly of inorganic matter and containing the toxic organic matter, thus generating a gas containing the volatilized toxic organic matter; and treating the gas containing the volatilized toxic organic matter to detoxify the toxic organic matter, wherein the waste is an incineration fly ash.

Waste consisting mainly of inorganic matter and containing organic matter generally contains more than one kind of toxic organic substance, independent of the type of waste in any form of soil, incineration residue, and adsorption residue. When that kind of waste contains components which volatilize at normal temperature as the toxic organic matter, a detoxification method in common practice is to repel the volatile components by aeration or the like, followed by adsorbing or decomposing these volatilized components.

When, however, the above-described toxic organic matter is an organic halogenide compound having a large molecular weight, the temperature required to volatilize the compound to a non-toxic level is very high. In addition, when an organic halogenide compound is brought to a high temperature level in an oxidizing atmosphere, strongly oxidizing gases such as chlorine gas may be generated. Consequently, according to the method described above, the organic matter is chlorinated, and further toxic organic matter may be yielded. Furthermore, when a waste containing a large amount of organic matter is heated to a high temperature, there is a danger of ignition.

To cope with these problems, there are recommended methods such as the one to decompose the waste in a reducing atmosphere using a catalyst and the one to incinerate the waste. According to these methods, generation of $NO_x$ during the detoxification of waste is prevented. In addition, low temperature treatment reduces the treatment cost. These methods have, however, several problems. The following is the description about these problems, based on the investigations given by the inventors of the present invention.

A soil and an incineration fly ash, which are waste, were separately impregnated with a trichlorophenol and a salt, which are toxic organic matter or sources of toxic organic matter. The mixture was allowed to stand outdoor for one month. After then, each 30 g aliquot of the mixture was weighed to put it into a tubular furnace having 40 mm in diameter and 500 mm in length. Nitrogen gas was introduced to flow through the furnace at a rate of 40 ml/min, and the mixture was heated from normal temperature to a specified level, then the temperature was maintained. The behavior of volatilization of the toxic organic matter from the waste into the nitrogen gas was monitored.

In the case of soil, about 70% of trichlorophenol was volatilized at 200°C of holding temperature. That is, for the case of soil, most portion of trichlorophenol was volatilized at a relatively low temperature level. On the other hand, in the case of incineration fly ash, very little volatilization of trichlorophenol occurred at 200°C of holding temperature, while 20% volatilization occurred at 300°C, 35% at 350°C, and 40% at 400°C. That is, the incineration fly ash is more difficult for volatilizing toxic organic matter than the soil. Nevertheless, increased temperature increased the amount of volatilization of toxic organic matter also in the case of incineration fly ash. The residual amount of trichlorophenol in the fly ash heated to 350°C was analyzed to find about 3% of the initial amount.

According to the above-described method, the decomposition of trichlorophenol is enhanced with the increase in heating temperature, and inversely, the amount of volatilization of the decomposed substances is increased. As a result, particularly in a flow system, it is supposed to be difficult to decompose trichlorophenol and other toxic substances to an expected level.

Next, the inventors of the present invention carried out similar test as above under an air flow system. The result was similar with that given above for the case of soil. For the case of incineration fly ash, however, a different result from that given above was obtained, or similar result with that described below, because of synthesis of dioxin.

Altwicker et al. reported the result of a heating experiment of incineration fly ash in Organologen Compounds Vol. 20 (1994). According to the report, when a gas containing 10% oxygen gas was passed through a system, and when a fly ash was heated in the system, the amount of dioxins yielded by re-synthesis reactions increased along with the increase of temperature from 250 to 300°C, while giving slightly lower amount thereof at 350°C than that at 300°C. In addition, only 37% of the dioxins migrated to gas phase at 300°C, and 94% migrated at 350°C. Furthermore, Altwicker et al. disclosed the relation between the oxygen concentration and the amount of dioxins. That is, when a fly ash was heated to 300°C in a flow system, the amount of dioxins increased with the increase in oxygen concentration. In particular, even at 1% of oxygen concentration, the generated dioxins was as high as several hundreds of nanograms per gram, (which corresponds to about 10% to the case of air system).

To achieve decomposition rates of 90% or more in the above-described processes, the treatment is necessary to be conducted either at 1% or lower oxygen concentrations or in a closed system. Since, however, the bulk density of incineration fly ash is as low as around 0.3 g/ml, the entrained air volume becomes very large. Therefore, when an inert gas is used to regulate the oxygen concentration to 1% or lower level, the consumption of the inert gas becomes very large. On the other hand, when the treatment is carried out in a closed system, a problem of necessity of very large facility capacity arises.

As described above, the above-described heating and decomposing method in a reducing atmosphere is not a fully satisfactory method.

To the contrary, according to the method of the present invention, the detoxification of a waste is carried out by volatilize toxic organic matter from the waste, and the volatilized toxic organic matter is treated for detoxification in a separate process. As a result, according to the present invention, the detoxification of waste is able to be done at a high degree of freedom. For example, according to the present invention, the detoxification of waste does not need to control the oxygen concentration, and is able to be done in a flow system. Consequently, the method according to the present invention is able to detoxify waste at further high efficiency and further low cost.

According to the present invention, the volatilization treatment of toxic organic matter from a waste is conducted by heating the waste. The volatilization treatment is carried out in a manner that no combustion occurs and that finally the toxic organic matter in the waste is almost completely eliminated.

In the method according to the present invention, the above-described treatment may be conducted while varying the pressure of the system, adding to the heating of the waste. That is, the volatilization of toxic organic matter may be enhanced by bringing the pressure of the system to below atmospheric pressure.

In addition, according to the present invention, the volatilization of toxic organic matter may be enhanced by supplying a gas enhancing the volatilization to the volatilization tank which contains the waste. Alternatively, without supplying the gas enhancing the volatilization, a gas entrained with the waste to enter the volatilization tank may be vented by suction, or the volatilized gas may be vented by suction while supplying the gas enhancing the volatilization.

Furthermore, when the toxic organic matter is volatilized, a fluidized bed of waste may be formed by vibrating the waste. In that case, the waste is uniformly heated, and the volatilization of toxic organic matter is enhanced. The fluidized bed of waste may be formed by, for example, vibrating mechanically the vessel holding the waste, or by intermittently supplying a gas to the waste.

According to the present invention, the detoxification treatment of the volatilized toxic organic matter may be carried out using combustion method, catalytic combustion method, catalytic decomposition method, method of decomposition by contacting with fused material, adsorption method, scrubbing method, cooling and condensing method, and their combined method. For example, when the combustion method is applied, the amount of oxygen necessary for combustion reduces compared with the case that the toxic organic matter is not volatilized from the waste. Accordingly, even when air is used as the oxygen source, the detoxification is able to be carried out without generating a large amount of flue gas and $NO_x$.

When toxic organic matter is detoxified using a catalyst, the probability of contact between the toxic organic matter and the catalyst increases compared with the case that the organic matter is not separated from the waste. Particularly when the catalytic combustion method or the catalytic decomposition method of moving bed or fluidized bed type is applied, the probability of contact between the toxic organic matter and the catalyst further increases. Therefore, the detoxification treatment can be carried out without generating large amount of flue gas and NOx, further the waste can be detoxified at a low cost.

The waste is incineration fly ash, so that the volatilized toxic organic matter may be detoxified by the catalytic combustion method of fixed bed type or the catalytic decomposition method of fixed bed type. Generally, when energy is given to a waste to volatilize toxic organic matter, a part of the energy is consumed to vaporize water. To the contrary, when the waste is incineration fly ash, since the incineration fly ash contains very little water, the toxic organic matter is efficiently volatilized. Furthermore, in that case, the concentration of the toxic organic matter in the gas containing the volatilized toxic organic matter increases. As a result, under the absence of water, even the catalytic combustion method of fixed bed type or the catalytic decomposition method of fixed bed type conducts the detoxification treatment at a satisfactory high efficiency.

When decomposition method contacting with a melted(fused) material, adsorption method, scrubbing method, or cooling and condensing method is applied for detoxification of volatilized toxic organic matter, the detoxification is carried out without generating large amount of flue gas and NOx.

According to the present invention, the detoxification treatment of volatilized toxic organic matter does not necessarily require heating stage. The gas supplied to the detoxification treatment according to the present invention is generated from heating of waste. Consequently, if only the temperature of gas supplied to the detoxification treatment is sufficiently high to conduct the detoxification treatment, there is no need of additional heating. That is, the detoxification treatment of a waste is able to be conducted at lower cost than prior arts.

BRIEF DESCRIPTION OF THE DRAWINGS

FIG. 1 shows a conceptual process flow diagram of a method for disposing a waste according to the first embodiment of the present invention.
FIG. 2 shows another conceptual process flow diagram of a method for disposing a waste according to the first embodiment of the present invention.
FIG. 3 shows a further conceptual process flow diagram of a method for disposing a waste according to the first embodiment of the present invention.
FIG. 4 shows still another conceptual process flow diagram of a method for disposing a waste according to the first embodiment of the present invention.
FIG. 5 shows still further conceptual process flow diagram of a method for disposing a waste according to the first embodiment of the present invention.
FIG. 6 shows still other conceptual process flow diagram of a method for disposing a waste according to the first embodiment of the present invention.
FIG. 7 shows a conceptual process flow diagram of a method for disposing a waste according to the second embodiment of the present invention.

FIG. 8 shows another conceptual process flow diagram of a method for disposing a waste according to the second embodiment of the present invention.

FIG. 9 shows still another conceptual process flow diagram of a method for disposing a waste according to the second embodiment of the present invention.

FIG. 10 shows still further conceptual process flow diagram of a method for disposing a waste according to the second embodiment of the present invention.

FIG. 11 shows a process flow diagram of a volatilization of toxic organic matter according to the first embodiment and the second embodiment of the present invention.

FIG. 12 is a graph showing an example of temperature profile in a stage of volatilization of toxic organic matter according to the first embodiment and the second embodiment of the present invention.

FIG. 13A is a conceptual process flow diagram of volatilization of toxic organic matter according to the first embodiment and the second embodiment of the present invention.

FIG. 13B is another conceptual process flow diagram of volatilization of toxic organic matter according to the first embodiment and the second embodiment of the present invention.

FIG. 14 is a graph showing pressure conditions in a stage of volatilization of toxic organic matter according to the first embodiment and the second embodiment of the present invention.

FIG. 15 shows an example of arrangement of volatilization tanks according to the first embodiment and the second embodiment of the present invention.

FIG. 16 shows another example of arrangement of volatilization tanks according to the first embodiment and the second embodiment of the present invention.

FIG. 17 shows a further example of arrangement of volatilization tanks according to the first embodiment and the second embodiment of the present invention.

FIG. 18A shows still another example of arrangement of volatilization tanks according to the first embodiment and the second embodiment of the present invention.

FIG. 18B shows still further example of arrangement of volatilization tanks according to the first embodiment and the second embodiment of the present invention.

FIG. 18C shows still other further example of arrangement of volatilization tanks according to the first embodiment and the second embodiment of the present invention.

FIG. 19 shows a schematic drawing of an example of volatilization apparatus used in a method for disposing a waste according to the first embodiment and the second embodiment of the present invention.

FIG. 20A shows another schematic drawing of an example of volatilization apparatus used in a method for disposing a waste according to the first embodiment and the second embodiment of the present invention.

FIG. 20B shows a further schematic drawing of an example of volatilization apparatus used in a method for disposing a waste according to the first embodiment and the second embodiment of the present invention.

FIG. 20C shows still another schematic drawing of an example of volatilization apparatus used in a method for disposing a waste according to the first embodiment and the second embodiment of the present invention.

FIG. 21 shows a process flow diagram of a solid-gas separation stage according to the first embodiment and the second embodiment of the present invention.

FIG. 22A is a conceptual illustration of a method for solid-gas separation according to the first embodiment and the second embodiment of the present invention.

FIG. 22B is another conceptual illustration of a method for solid-gas separation according to the first embodiment and the second embodiment of the present invention.

## DESCRIPTION OF THE PREFERRED EMBODIMENT

The present invention is described in more detail in the following referring to the drawings.

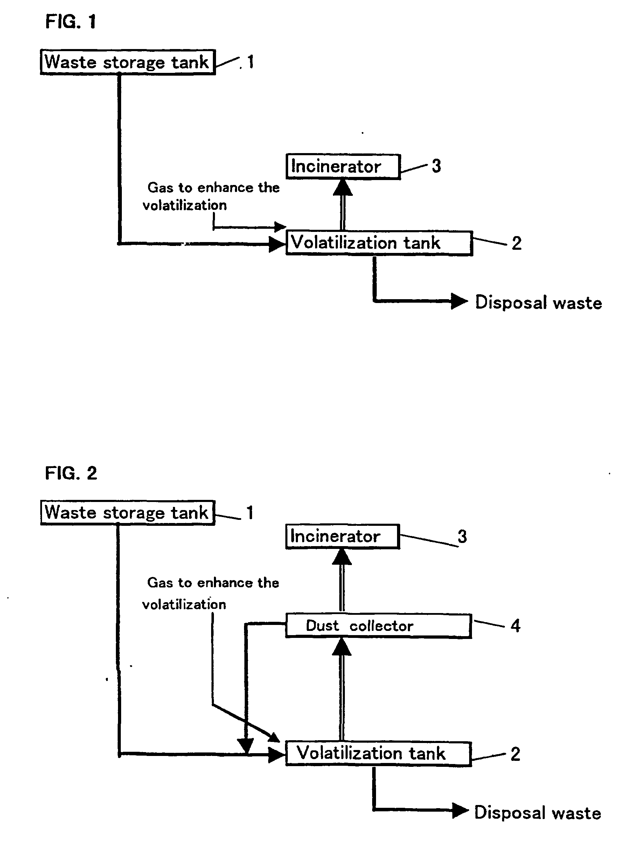

FIG. 1 through 6 show conceptual process flow diagrams of methods for disposing a waste according to the first embodiment of the present invention. According to the method for disposing a waste of the first embodiment of the present invention, as seen in FIG. 1, a waste consisting mainly of inorganic matter and containing toxic organic matter, or, for example, an incineration fly ash, is charged from a waste storage tank 1 to a volatilization tank 2. (Arrow symbol in the figures herein given indicates the flow direction of respective materials: for the flow of waste, $\Rightarrow$ for the flow of gas and waste, and $\rightarrow$ for the flow of gas.)

In the volatilization tank 2, the toxic organic matter in the incineration fly ash is heated to volatilize. The volatilization of the toxic organic matter is enhanced generally by supplying a gas enhancing the volatilization, such as air, to the volatilization tank 2. Examples of applicable gas enhancing the volatilization include, steam, an inert gas, a gas generated by heating the waste, a gas generated accompanied with detoxification of the fly ash, and their mixed gas, other than air. Instead of supplying a gas enhancing the volatilization, a gas which was supplied to the volatilization tank 2 entrained with the incineration fly ash may be introduced by sucking the intratank atmosphere for venting, or a gas enhancing the volatilization may be introduced while sucking the intratank atmosphere for venting. The toxic organic matter thus volatilized is generally forcefully separated from the fly ash by solid-gas separation treatment. After the treatment, the fly ash is free of toxic organic matter, and it is discharged from the volatilization tank 2 as a detoxified disposal fly ash. On the other hand, the gas containing volatilized toxic organic matter is treated by, for example, combustion method to detoxify.

When the combustion method is applied for detoxification, the gas containing the volatilized toxic organic matter is supplied from the volatilization tank 2 to an incinerator 3, as shown in FIG. 1. At that moment, the emitted dust discharged from the volatilization tank 2 accompanied with the above-described venting gas may be collected by an dust collector 4, and the collected dust may be recycled to the volatilization tank 2, as shown in FIG. 2. The combustion of the gas containing the volatilized toxic organic matter may be carried out in burner flames of, for example, an exclusive-use incinerator or an existing incinerator.

The temperature level for heating the waste in the volatilization tank 2 differs with the kinds of toxic organic matter contained. For example, when the toxic organic matter is benzene halide or the like, the heating temperature is around 200°C, and, when the toxic matter is dioxins, 350°C or higher temperatures are required. Generally speaking, the upper limit of the heating temperature is around 500°C which induces melting of salts and induces solidification thereof. When the heating in the volatilization tank 2 is conducted by an indirect external heating method, a direct heating method using a heated gas enhancing the volatilization, or a combined method of them, it is preferred that the temperature of the wall to which the treating waste contacts is 600°C or below.

A preferred content of organic matter in the waste is 5% or less. For example, when the organic matter in the waste is thermoplastic plastics, no volatilization trouble owing to the fusion and adhesion occurs if only the content of the organic matter is 5% or less. Also in the case that the organic matter in the waste is a heavy oil or a thermosetting resin, if the content of the organic matter is 5% or less, there occurs no volatilization trouble. Excessive content of organic matter in the waste may induce ignition caused by thermal decomposition gases, which is, however, able to be prevented by applying adequate control of atmospheric gases and adequate measures to static charge.

The gas treated by detoxification is vented as the detoxified disposal gas. Thus, the detoxification of waste is performed.

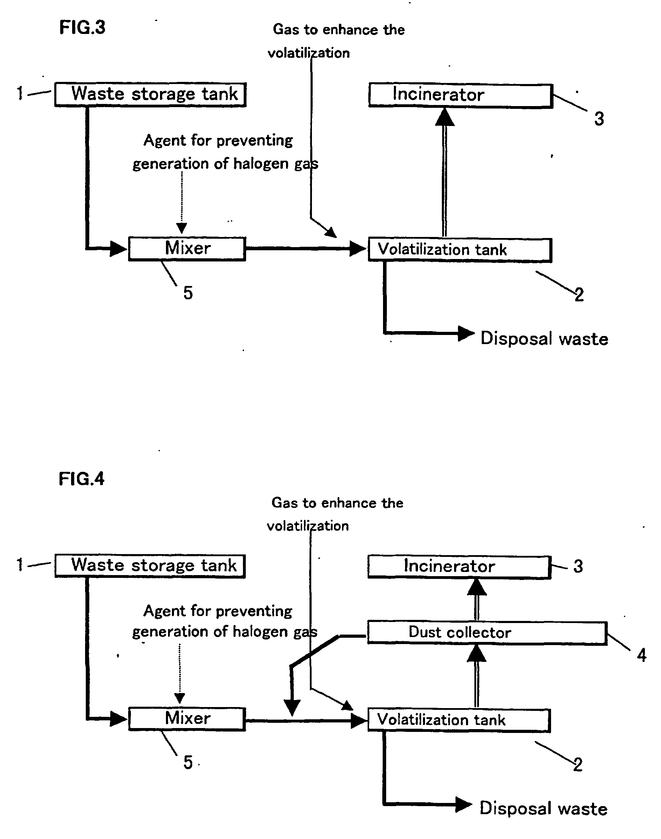

As shown in FIG. 3 and FIG. 4, in the process described in FIG. 1 and 2, the waste may be mixed with an agent for preventing generation of halogen gas in a mixer 5, which mixture may be then supplied to the volatilization tank 2. When halides exist in the waste, reactions such as the one given below proceed in the volatilization tank 2.

$$2NaCl + SiO_2 + 1/2O_2 \rightarrow Na_2SiO_3 + Cl_2$$

The chlorine gas generated in the above-given reaction may yield a toxic substance by chlorinating organic matter in the waste under the presence of a metal as a catalyst. In particular, when the content of the halogen element is 0.1% or more, the yielded toxic substance may become a non-negligible concentration.

To the contrary, when a waste is mixed with: a hydroxide of sodium, potassium, calcium, magnesium, and the like; water; a reducing agent such as metal, alloy, nitrous oxide, and hydrogenide compound; or their mixture, in the mixer 5, the formation of halides is prevented. For example, when water is added, it suppresses the catalytic performance of metals contained in the waste.

In the case of addition of hydroxide of sodium, potassium, calcium, magnesium, and the like, metals which function as a chlorinating catalyst for organic matter can be converted to metallic hydroxides. That is, the hydroxide prevents chlorinating of organic matter existed in the waste. When a reducing agent is added, chlorine gas and the like generated in the reaction given above can be absorbed to the reducing agent. Therefore, also in this case, the chlorinating of organic matter in the waste is prevented.

To the volatilization tank 2, an alcohol may be charged along with the waste. When an alcohol is charged, the toxic organic matter which was entrapped by the waste by adsorption and other activities is eluted by the alcohol, thus enhancing the volatilization of the toxic organic matter.

The description given above dealt with a procedure of charging the waste and additives to the volatilization tank 2 after mixing thereof. The waste and the additives may be separately charged to the volatilization tank 2 without mixing in advance. Also in the latter case, similar effect as described above is attained.

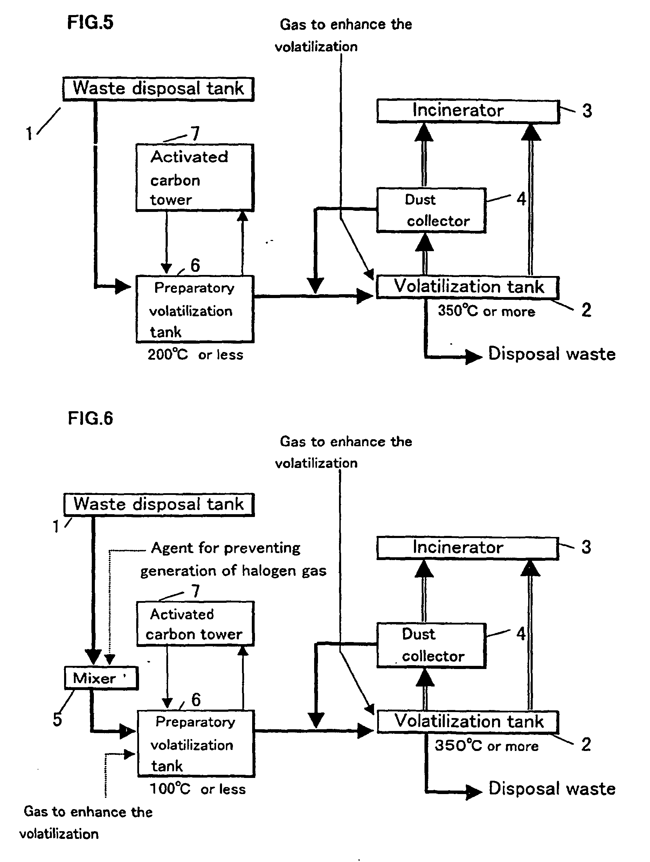

When the above-described waste contains mercury, the treatment of the waste is preferably conducted in a preparatory volatilization tank 6 before charging the waste to the volatilization tank 2, as shown in FIG. 5. By heating the waste in the preparatory volatilization tank 6 to, for example, around 200°C or below, mercury and other substances contained in the waste can be volatilized. Thus generated volatilized gas is then introduced to an activated carbon adsorption tower 7 to adsorb the volatilized matter to the activated carbon to eliminate the mercury from the waste.

On removing the mercury from the waste, an reducing agent is preferably added to the waste, as shown in FIG. 6. In this case, the mercury compounds in the waste are reduced to yield metallic mercury. As a result, the volatilization of mercury is easily occurred, which results in reduction of the volatilization temperature to, for example, around 100°C or below.

The addition of reducing agent may be conducted by mixing the reducing agent with the waste, or may be conducted by charging them separately to the preparatory volatilization tank 6.

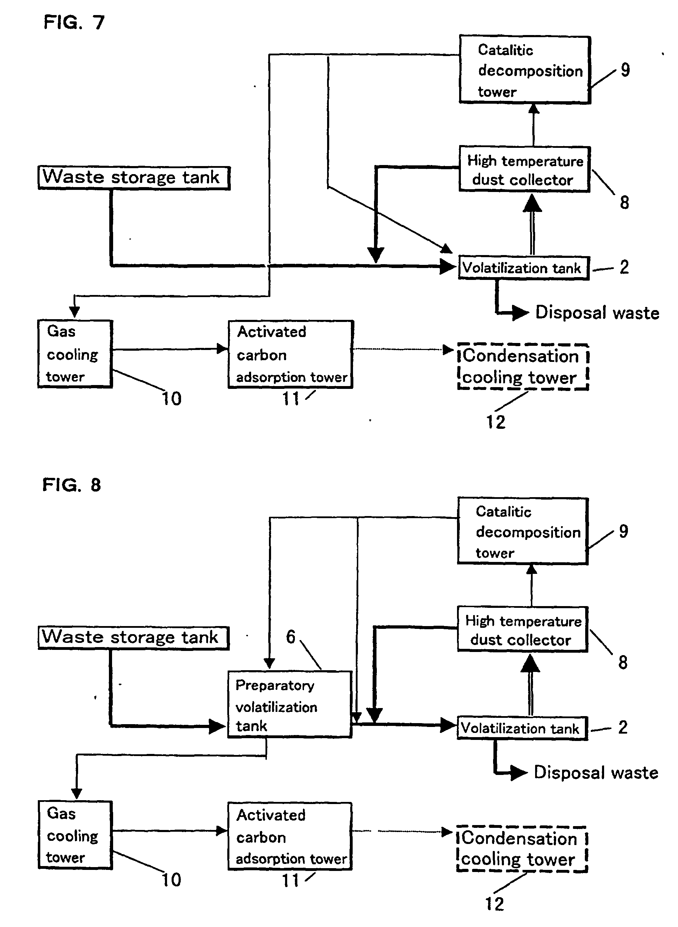

According to the process of the first embodiment described above, the gas containing volatilized toxic organic matter is detoxified by the combustion method. Alternatively, the gas may be detoxified using a catalyst. The description on the detoxification treatment using a catalyst is given below referring to FIG. 7 through 10.

FIG. 7 through 10 show conceptual process diagrams illustrating the method for disposing a waste according to the second embodiment of the present invention. The detoxification treatment using a catalyst is carried out, for example, as shown in FIG. 7, by supplying a gas containing volatilized toxic organic matter from the volatilization tank 2 to a catalytic decomposition tower 9 via a high temperature dust collector 8.

That is, by applying the same procedure described in the first embodiment, the gas containing toxic organic matter volatilized in the volatilization tank 2 is generated. Then, dust is removed from the gas using the high temperature dust collector 8, and the gas free from dust is fed to the catalytic decomposition tower 9. The catalytic decomposition tower 9 contains a common oxide catalyst such as a transition metal oxide or noble metal catalyst comprising platinum, palladium, rhodium, and the like, and an oxide support. The gas is detoxified by the catalytic actions.

The detoxification of the toxic organic matter in the catalytic decomposition tower 9 is carried out by, for example, a catalytic combustion method of moving bed or fluidized bed, or a catalytic decomposition method. When the waste is incineration fly ash, the volatilized toxic organic matter may be detoxified by the fixed bed catalytic combustion method or the fixed bed catalytic decomposition method.

As described above, the detoxification treatment in the catalytic decomposition tower 9 is conducted either by the catalytic combustion method or the catalytic decomposition method. The adoption of the treatment method depends on the kinds of the toxic organic matter. The difference between the catalytic decomposition method and the catalytic combustion method is that the former conducts dechlorination and that latter applies oxidation decomposition of organic matter. Either the catalytic decomposition method or the catalytic combustion method is selectable depending on the treatment temperature. When the temperature is around 350°C or above, the catalytic combustion method is adopted. When the temperature is lower than that, for example, in a range of from 140 to 180°C, the catalytic decomposition method is adopted. When the catalytic decomposition method is applied, sulfur compounds may act as catalyst poison, so that the gas is preferably brought into contact with iron or iron compound such as iron salt, or the like to eliminate sulfur before the catalytic reactions. When the catalytic combustion method is applied, a flammable organic matter which exists in gas phase under the temperature condition of 350°C or above may be added to the gas containing volatilized toxic organic matter.

Above-described detoxification treatment using catalyst may include the step of heating the catalyst or heating the gas charged from the volatilization tank 2. When, however, the temperature of the gas supplied from the volatilization tank 2 is sufficiently high, the heating is not needed. In the latter case, it is possible to detoxify the waste at further low temperatures. The detoxification treatment using catalyst is generally conducted and oxygen concentrations not less than the theoretical oxygen demand.

The gas which was detoxified in the catalytic decomposition tower 9 is generally recycled, a part thereof, to the volatilization tank 2, and the remainder is supplied to a gas cooling tower 10. The gas which is cooled in the gas cooling tower 10 is introduced to an activated carbon adsorption tower 11, where the undecomposed organic matter is adsorbed to remove from the gas. At the same time, mercury and other substances in the gas are adsorbed to remove.

The gas from which the organic matter, the mercury, or the like in the activated carbon adsorption tower 11 is introduced to a condensation cooling tower 12, then is vented to outside of the process. Through the above-described procedure, the waste is detoxified.

According to a process flow diagram shown in FIG. 7, the mercury is adsorbed to remove after the toxic organic matter is detoxified. Alternatively, adsorption of mercury and the like may be done in accordance with the process flow shown in FIG. 8. That is, the waste is heated in the preparatory volatilization tank 6 to temperatures of, for example, 200°C or below. Thus, the mercury and the like are volatilized from the waste. The gas containing the volatilized mercury and the like is introduced sequentially to the gas cooling tower 10, the activated carbon adsorption tower 11, and the condensation cooling tower 12.

The waste which eliminated mercury and the like in the preparatory volatilization tank 6 is supplied to the volatilization tank 2. In the volatilization tank 2, the toxic organic matter is volatilized as described above. The gas containing the volatilized organic matter removes the dust therefrom in the high temperature dust collector 8, then enters the catalytic decomposition tower 9. A part of the gas which was detoxified in the catalytic decomposition tower 9 is supplied to the preparatory volatilization tank 6, and the remainder is fed to the volatilization tank 2. That is, according to the process flow shown in FIG. 8, mercury is removed from the waste before detoxifying the gas.

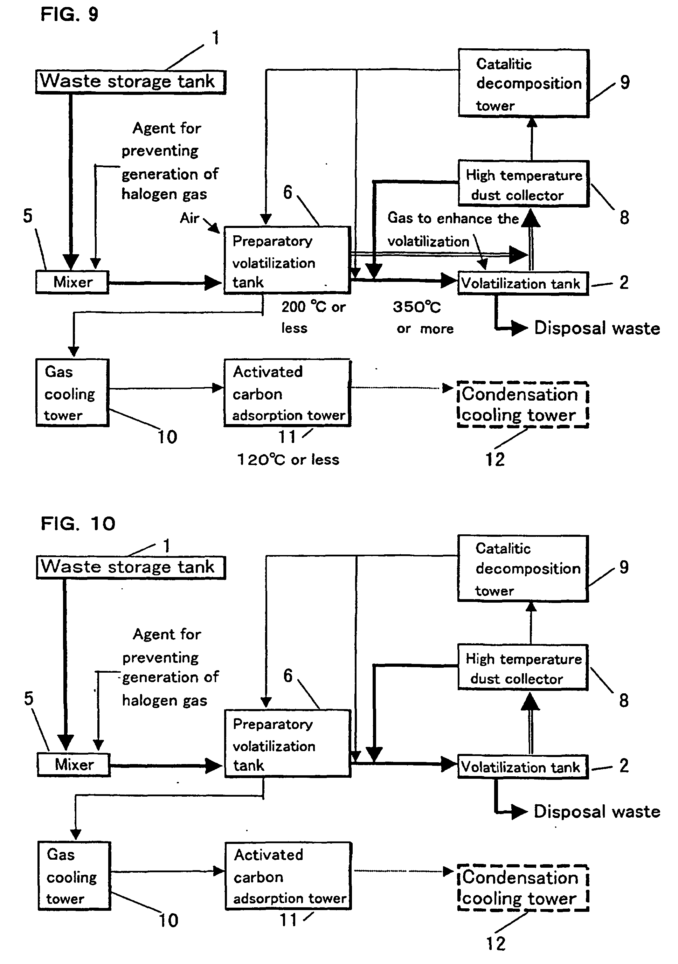

According to the process flow shown in FIG. 8, all of mercury and the like volatilized in the preparatory volatilization tank 6 are fed to the gas cooling tower 10. Alternatively, as shown in FIG. 9, a part of the gas may be fed to the high temperature dust collector 8. Or, as shown in FIG. 9 and 10, the waste may be mixed with a metallic hydroxide, water, or the like, then may be fed to the preparatory volatilization tank 6. In that case, organic matter in the waste is prevented from chlorinating.

According to the method for disposing a waste of the first embodiment and the second embodiment given above, the charge of waste to the volatilization tank 2 may be done either in a batch-wise mode or in a continuous mode. When the waste is continuously fed to the volatilization tank 2, the gas enhancing the volatilization is continuously charged to the volatilization tank 2, thus the gas containing volatilized toxic organic matter and the waste from which toxic organic matter was eliminated are continuously discharged from the volatilization tank 2.

On the other hand, when the waste is charged in batch-wise mode, normally the gas enhancing the volatilization is continuously supplied to the volatilization tank 2, and the gas containing the volatilized toxic organic matter is continuously discharged from the volatilization tank 2, while the waste from which the toxic organic matter was removed is intermittently discharged from the volatilization tank 2. That is, the batch-wise operation conducts sequential operations of: the charge of waste, the heating of waste, and the discharge of treated waste.

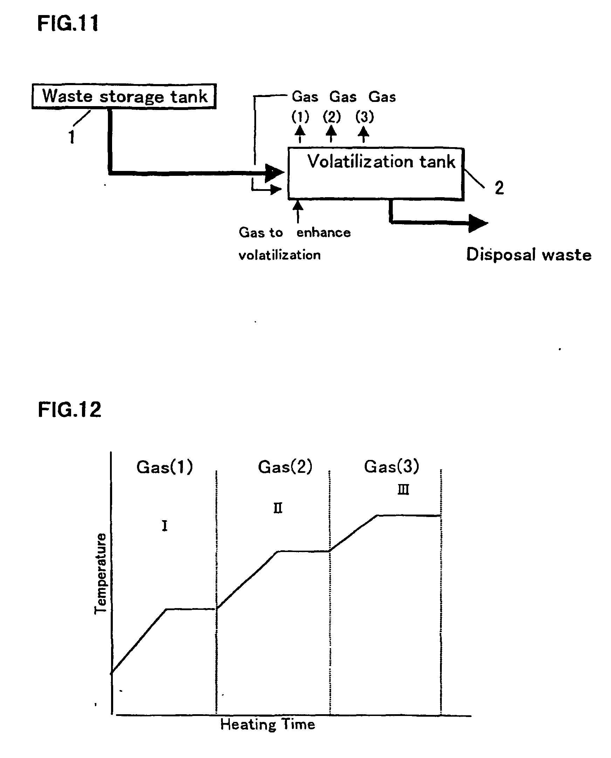

When the waste is charged in batch-wise mode, a temperature gradient may be established in the volatilization tank 2. To this point, description is given below referring to FIG. 11.

FIG. 11 shows a process flow diagram of a stage of volatilization of toxic organic matter according to the first embodiment and the second embodiment of the present invention. As shown in FIG. 11, when a temperature gradient is given in a manner to increase the temperature from the supply side of waste and of gas enhancing the volatilization to the discharge side of the waste, the gas composition differs between the gas (1) vented from the charge side, the gas (2) vented from the central portion, and the gas (3) vented from the discharge side.

Generally, the conditions of detoxification treatment of gas containing toxic organic matter differ with the kinds of components thereof. Accordingly, as described above, the volatilization of toxic organic matter separately responding to the kinds thereof allows to implement the detoxification operation under respective optimum conditions for the gas components. In that case, as shown in FIG. 11, a part of or all of the gas (1) vented from the volatilization tank 2 may be recycled to the volatilization tank (2).

According to the method described above, a temperature gradient is established in the volatilization tank 2 to separately volatilize the toxic organic matter responding to individual kinds thereof. However, other methods may volatilize the toxic organic matter separately for individual kinds thereof. For example, as shown in FIG. 12, when the temperatures in the volatilization tank 2 are increased stepwise, responding to the heating temperatures of from I through III, respective kinds of gases (1) through (3) are generated. Therefore, each of the gases (1) through (3) can be detoxified under optimum condition, respectively.

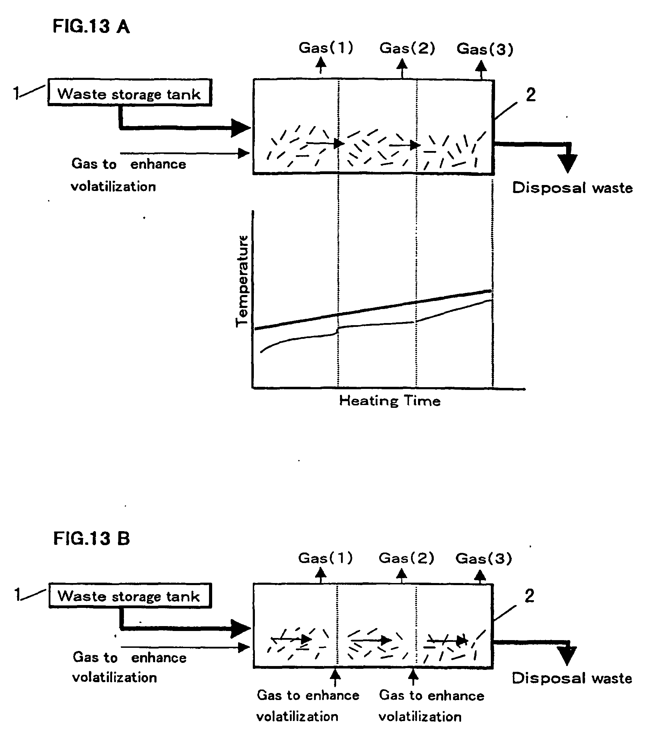

The above-given description dealt with the case that the waste is charged in batch-wise mode and that the toxic organic matter is volatilized separately depending on the kinds thereof. It is, however, possible, also in the case of continuous charge of waste, to volatilize the toxic organic matter separately depending on the kinds thereof. To this point, description is given below referring to FIG. 13.

FIG. 13A and FIG. 13B show the volatilization stage of toxic organic matter according to the first embodiment and the second embodiment of the present invention. As shown in FIG. 13A, when a temperature gradient is established in the volatilization tank in a manner to increase the temperature from the supply side of waste to the discharge side of the waste, the gas composition differs between the gas (1) vented from the charge side, the gas (2) vented from the central portion, and the gas (3) vented from the discharge side. Accordingly, also in the case that the waste is continuously charged to the volatilization tank 2, each of the gases (1) through (3) can be detoxified under optimum condition, respectively.

The temperature gradient created in the volatilization tank 2 may have a monotonously increasing profile, as shown in FIG. 13A, or may have a stepwise increasing profile. As shown in FIG. 13B, it is preferable that the gas enhancing the volatilization is supplied to the volatilization tank 2 at points responding to individual venting positions. In that case, the toxic organic matter is able to be volatilized for each kind thereof at further high accuracy.

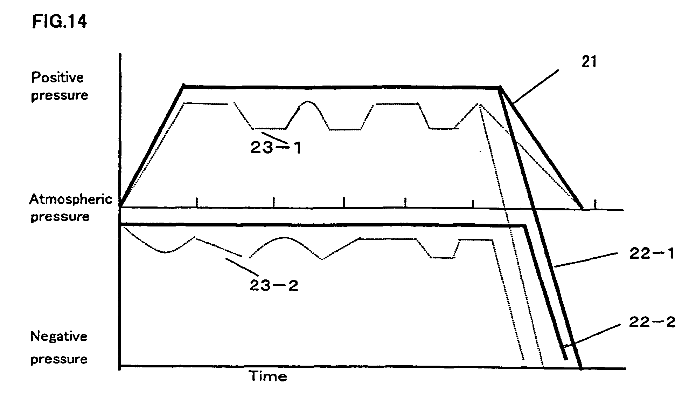

In the method for disposing waste according to the above-described first embodiment and second embodiment, when the waste is charged in batch-wise mode, the volatilization of toxic organic matter is enhanced by controlling the pressure in the volatilization tank. The procedure is described below referring to FIG. 14.

FIG. 14 is a graph showing the pressure conditions during the stage of volatilization of toxic organic matter according to the first embodiment and the second embodiment of the present invention. The horizontal axis is the time, and the vertical axis is the internal pressure of the volatilization tank 2.

As shown in the curve 21, when the pressure inside of the volatilization 2 is kept at a positive pressure, then after a predetermined time has passed, the internal pressure thereof is reduced to atmospheric pressure, the pressure difference assures efficient volatilization of the toxic organic matter. As shown in the curves 22-1 and 22-2, when the content of the volatilization tank 2 is heated while maintaining the internal pressure thereof to a positive pressure or atmospheric pressure, the internal pressure may be brought to a negative pressure after a predetermined time has passed. Furthermore, as shown in the curves 23-1 and 23-2, even when the heating is given while swinging the internal pressure under positive pressures or under negative pressures, efficient volatilization of the toxic organic matter is attained. The internal pressure of the volatilization tank 2 is able to be swung by, for example, mounting a piston to the volatilization tank to vary the volume of the volatilization tank 2 responding to the drive of the piston.

The pressure changes shown in the curves 21 through 23 may be given at a single cycle per single heating treatment, or may be given by repeating several cycles per single heating treatment. Particularly when plurality of cycles are repeated per single heating treatment, the charge of a gas enhancing the volatilization is not needed by utilizing the pressure difference between atmospheric pressure and reduced pressure.

On volatilizing the toxic organic matter in the volatilization tank 2, the pressure changes and the temperature changes may be combined to apply. For example, the internal temperature of the volatilization tank 2 may be varied within a single cycle of pressure change. When a plurality of cycles of pressure changes are repeated, the internal temperature of the volatilization tank 2 may be changed at each cycle.

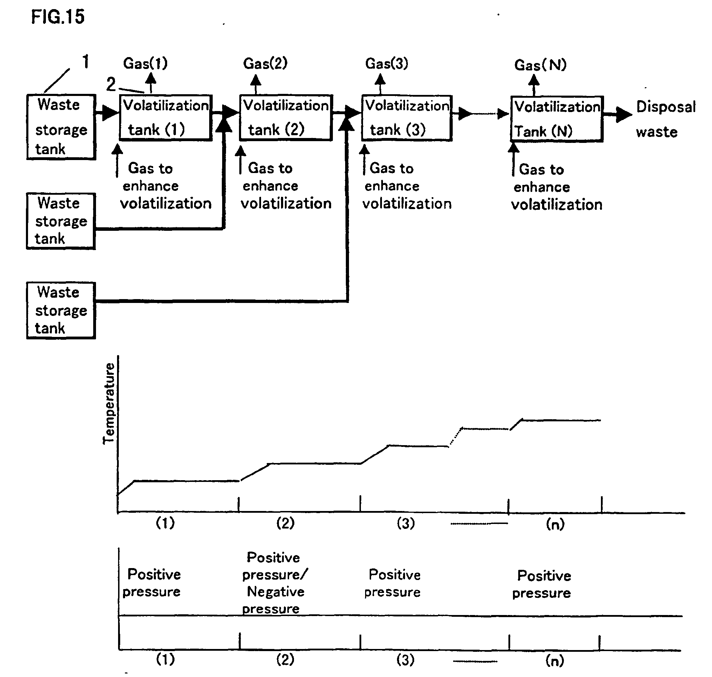

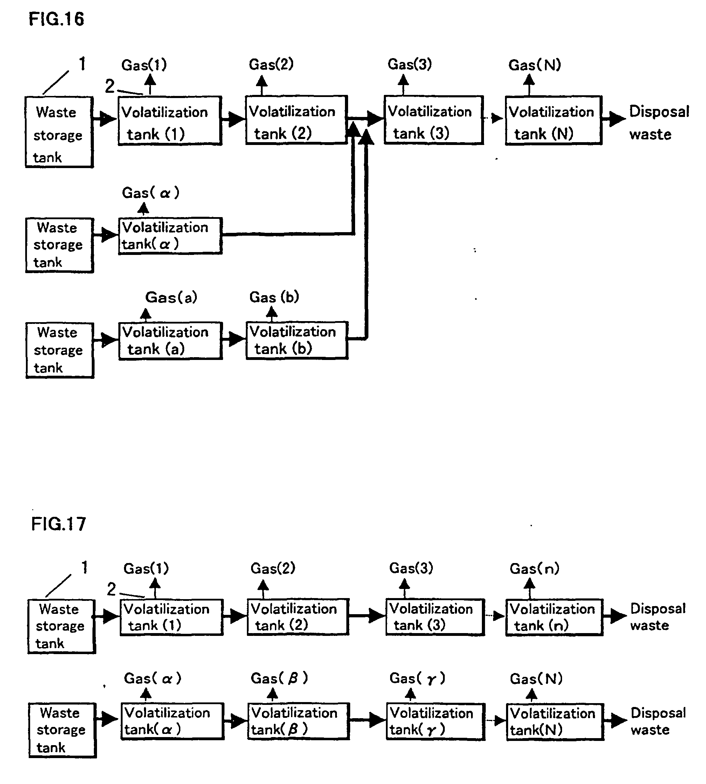

In the first embodiment and the second embodiment described above, plurality of volatilization tanks 2 may be applied for volatilizing the toxic organic matter from the waste. The procedure is described below referring to FIG. 15 and FIG. 16.

According to FIG. 15, the volatilization tanks (1) through (N) are arranged in series. That is, according to the arrangement of FIG. 15, the waste which was heated in the volatilization tank (n) is fed to the volatilization tank (n + 1). Untreated waste may further be charged to each of the volatilization tanks (1) through (N). If the kinds of untreated waste charged to each of the volatilization tanks (1) through (N), the gas recovered from each volatilization tank may have different composition to each other by establishing temperature differences between volatilization tanks, as shown in FIG. 15. Alternatively, as shown in FIG. 15, pressure control may be given to each volatilization tank, or the establishing temperature differences and the pressure control may be combined.

According to FIG. 16, the volatilization tanks (1) through (N) are arranged in series, and the volatilization tanks (a) and (b) are also in series. The volatilization tank (a) and the volatilization tank (b) are connected to the volatilization tank (3). That is, the volatilization tanks 2 in FIG. 16 are in a combined mode of series and parallel.

When the arrangement shown in FIG. 16 is adopted, the treatment of more than one kind of waste, each of which needs to be treated under different conditions, may be conducted by firstly treating each waste in separate process, and when they become possible to be treated under the same condition, then they may be treated in a single process. That is, multiplication of treatment processes is avoided.

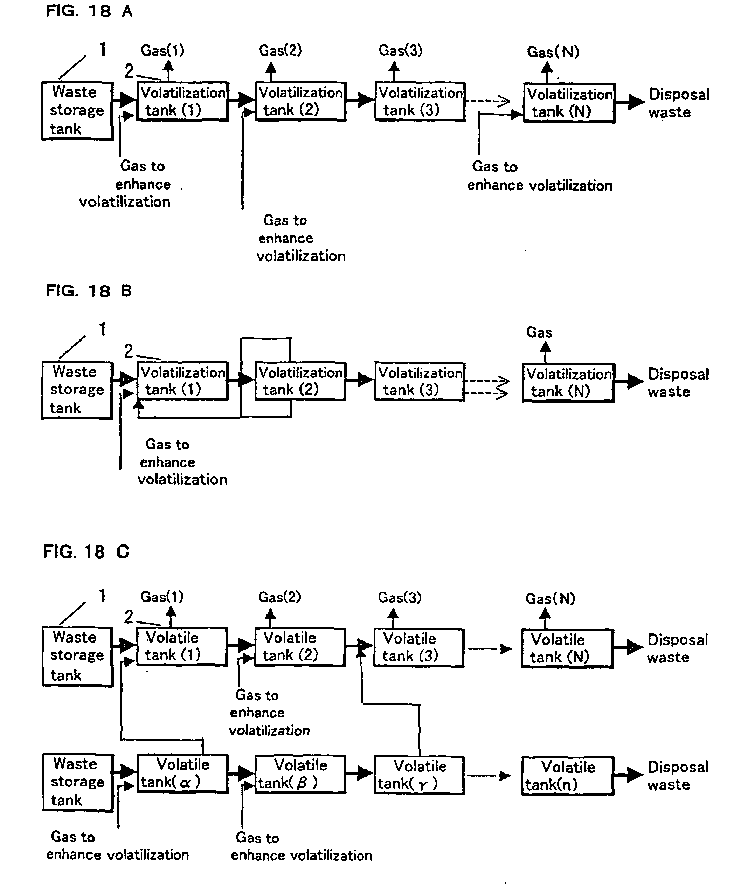

FIG. 15 and FIG. 16 show the arrangement of volatilization tanks 2 for volatilizing the toxic organic matter. Similar arrangement can be applied for detoxification of gas containing volatilized toxic organic matter. Furthermore, for example, as shown in FIG. 17, in the case that one of two different kinds of waste is treated by the volatilization tanks (1), (2), ... arranged in series, while the other waste is treated by the volatilization tanks (α), (β), ... arranged in series, the gases generated from respective volatilization tanks (2) may be separately detoxified, or detoxification may be given after mixing a part of the gases together, or detoxification may be given after the whole amount of gases are mixed together. The selection of the above-given methods depends on the gas temperature, the gas components, and the dust concentration in the gases.

When toxic organic matter is volatilized using plurality of volatilization tanks 2, a gas enhancing the volatilization may be supplied to a specific volatilization tank, and at least a part of gas vented from the volatilization tank may be introduced to other volatilization tanks. For example, when plurality of volatilization tanks 2 are arranged in series, and when the gas enhancing the volatilization is supplied to a part of the volatilization tanks 2, generally, as shown in FIG. 18A, the gas vented from a volatilization tank is not supplied to other volatilization tanks.

To the contrary, as shown in FIG. 18B and FIG. 18C, when the gas enhancing the volatilization is supplied to a volatilization tank, and when the gas vented from the volatilization tank is introduced to other volatilization tanks, the consumption of the gas enhancing the volatilization is reduced.

For volatilizing toxic organic matter from waste, which is described above, it is preferred to form a fluidized bed of the waste by vibrating the waste. When the waste in the volatilization tank 2 is agitated using agitator blades, the agitation of the waste may not be fully given depending on the agitation conditions such as rotational speed of the agitator blades. In that case, uniform heating of the waste cannot be attained, which may lead to failing in sufficient volatilization of toxic organic matter or to consuming large amount of energy for sufficiently volatilizing the toxic organic matter.

On the other hand, when vibration is given to the waste to form a fluidized bed, the agglomeration of waste is suppressed, so that further uniform heating of the waste is attained compared with the agitation of waste with agitator blades. As a result, the toxic organic matter is fully volatilized with less energy.

Further in this case, since uniform heating is attained, the control of heating temperature is readily performed. Therefore, specified components of the toxic organic matter in waste can be selectively and easily volatilized.

In addition, since the bulk density of the waste reduces in that case, the probability of contact between the waste and the gas in the volatilization tank 2 significantly increases, which allows to volatilize the toxic organic matter further efficiently.

To volatilize the toxic organic matter from waste using fluidized bed, an apparatus shown in FIG. 9, for example, may be used.

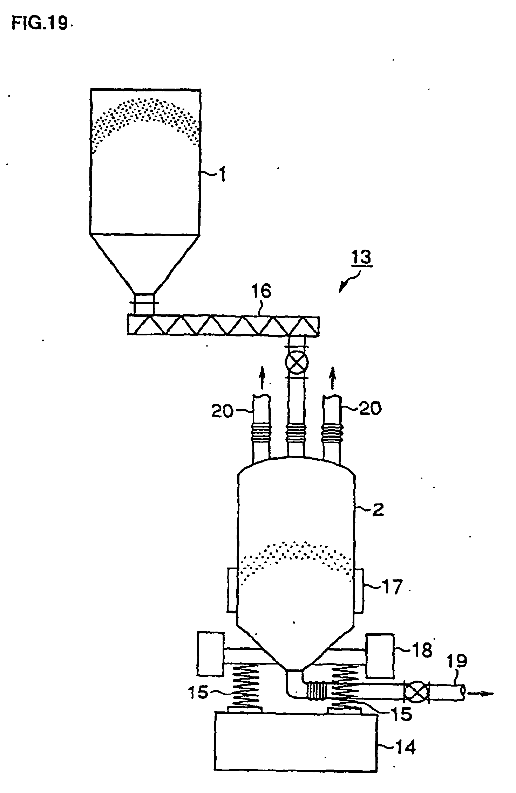

FIG. 19 shows a schematic drawing of an example of volatilization apparatus used in a method for disposing a waste according to the first embodiment and the second embodiment of the present invention. A volatilization apparatus 13 comprises a base plate 14 and a volatilization tank 2 which is supported by the base plate 14 in vibratory mode using elastic members such as springs 15.

The volatilization tank 2 is connected with a waste storage tank 1 via a conveyer 16. Thus the specified amount of waste is charged from the waste storage tank 1 to the volatilization tank 2.

The volatilization tank 2 is provided with a heater 17 such as a heating jacket or an electric heater to heat the volatilization tank 2 using, for example, hot flue gas from a waste incineration facility. Owing to the heater 17, the waste in the volatilization tank 2 is heated to a specified temperature level. Furthermore, the volatilization tank 2 is provided with a vibrator 18 which is structured by, for example, fixing an off-centered disk attached to rotor shaft of a motor.

At the bottom of the volatilization tank 2, there provided a pipe 19 to discharge the waste which completed the volatilization operation. At the top of the volatilization tank 2, there provided a pipe 20 to vent the gas containing toxic organic matter generated from the volatilization operation in the volatilization tank 2.

According to the volatilization apparatus 13 shown in FIG. 19, volatilization treatment of toxic organic matter from a waste is carried out by, for example, a procedure described below.

A specific amount of waste is charged to the volatilization tank 2 from the waste storage tank 1 using the conveyer 16. The waste charged to the volatilization tank 2 forms a fluidized bed by vibrating the volatilization tank 2 using the vibrator 18. In that state, the waste is heated to a predetermined temperature using the heater 17, thus inducing volatilization of toxic organic matter in the waste. The gas containing the volatilized toxic organic matter is discharged to outside of the volatilization tank 2 via the pipe 20, then is subjected to detoxification treatment.

After almost all of the target components of the toxic organic matter in the waste are volatilized, the waste is discharged to outside of the volatilization tank 2 via the pipe 19. After that, new waste is charged from the waste storage tank 1 to the volatilization tank 2, and the same procedure is repeated. According to the volatilization apparatus 13 shown in FIG. 19, the volatilization treatment is carried out following the above-described procedure.

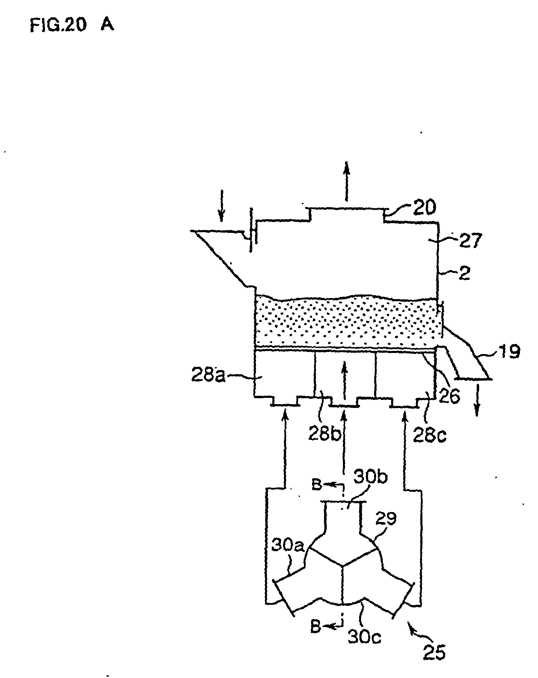

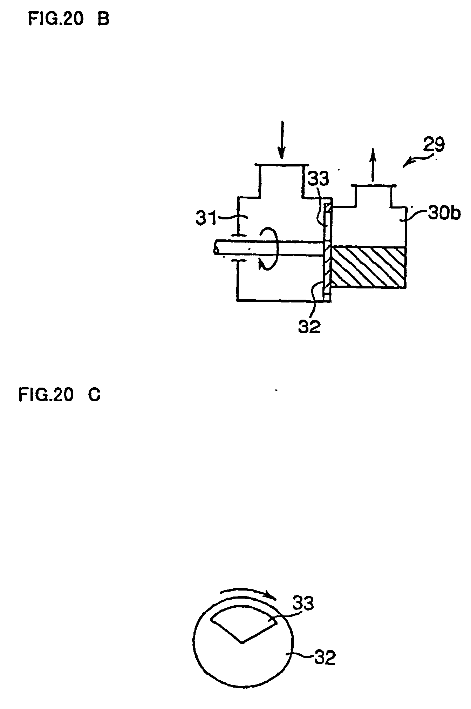

The volatilization treatment utilizing the above-described fluidized bed may be conducted using a volatilization apparatus 13 shown in FIG. 20.

FIG. 20A shows another schematic drawing of an example of volatilization apparatus used in the method for disposing a waste according to the first embodiment and the second embodiment of the present invention. FIG. 20B shows a cross sectional view along B-B line of a gas distributor of the volatilization apparatus 13 given in FIG. 20A. FIG. 20C shows a plan view of a disk used in the gas distributor shown in FIG. 20C.

The volatilization apparatus 13 shown in FIG. 20A comprises a volatilization tank 2 and a gas feeder 25. The volatilization tank 2 is separated to upper and lower spaces by a perforated dispersion plate 26. The upper space separated from the lower space by the distribution plate 26 is a volatilization chamber 27. The waste before subjecting to the volatilization treatment is charged to the volatilization chamber 27.

The lower space separated from the upper space by the distribution plate 26 is further divided into plurality of sub-spaces using plurality of partitions, thus forming gas chambers 28a through 28c. A gas distributor 29 as a part of the gas feeder 25 has a plurality of venting chambers 30a through 30c each of which is separated by partitions from each other. The gas chambers 28a through 28c are connected to respective venting chambers 30a through 30c. The gas coming from the gas feeder 25 is supplied to the volatilization chamber 27 via the distribution plate 26.

The gas feeder 25 comprises a gas supply source (not shown) and a gas distributor 29 which is connected to the gas supply source. The gas supply source supplies gas which was heated to a satisfactory temperature to the gas distributor 29.

The gas distributor 29 as a part of the gas feeder 25 has, as shown in FIG. 20B, a gas chamber 31 which receives gas from the gas supply source. The gas chamber 31 is connected to the venting chambers 30a through 30c, which are separated from each other by a disk 32 having a fan-shape opening 33 thereon. The disk 32 is ratably mounted, and selects the users of the gas supplied from the gas chamber 31 in sequent order of the venting chambers 30a, 30b, and 30c.

According to the volatilization apparatus 13 shown in FIG. 20, volatilization treatment of toxic organic matter from a waste is carried out by, for example, a procedure described below.

A specified amount of waste is charged from the waste storage tank to the volatilization chamber 27 via a conveyer, while a gas heated to a specified temperature is supplied to the gas chamber 31, and the disk 32 is rotated. The user of the gas supplied to the gas chamber 31 is switched along the rotation of the disk 32 in sequent order of the venting chambers 30a, 30b, and 30c. That is, to the gas chambers 28a through 28c, the hot gas is sequentially supplied in pulse mode. As a result, a fluidized bed of waste is formed in the volatilization chamber 27.

At this moment, as described above, the gas supplied to the gas chamber 31 has already been heated to a specified temperature. Accordingly, by supplying the gas to the volatilization chamber 27, the waste which forms the fluidized bed is heated to a specified temperature, which is able to volatilize the target components of the toxic organic matter in the waste.

After almost all of the target components of the toxic organic matter in the waste are volatilized, the waste is discharged to outside of the volatilization chamber 27 via the pipe 19. After that, new waste is charged from the waste storage tank to the volatilization chamber 27, and the same procedure is repeated. According to the volatilization apparatus 13 shown in FIG. 20, the volatilization treatment is carried out following the above-described procedure.

In the volatilization treatment, a similar heater described relating to FIG. 19 may be used. Alternatively, a part of the gas vented from the pipe 20 may be reused to form the fluidized bed. That is, a part of the gas may be circulated between the volatilization tank 22 and the gas feeder 25.

The procedure described in relation to FIG. 19 and FIG. 20 applied batch-wise volatilization treatment. The treatment, however, can be done in continuous mode. As for the cases of FIG. 19 and FIG. 20, the fluidized bed is formed by vibrating the volatilization tank 2 or by introducing a gas to the waste. Other methods, for example, ultrasonic waves or the like may be applied to form the fluidized bed.

According to the above-described first embodiment and second embodiment, the solid-gas separation of a mixture of waste and gas which contains volatilized toxic organic matter can be conducted by gravity method, centrifugal method, impingement method, or the like, or by combining them. The gravity separation does not necessarily need an additional separation tank, and normally the gravity separation is carried out in the heating tank (volatilization tank) 2.

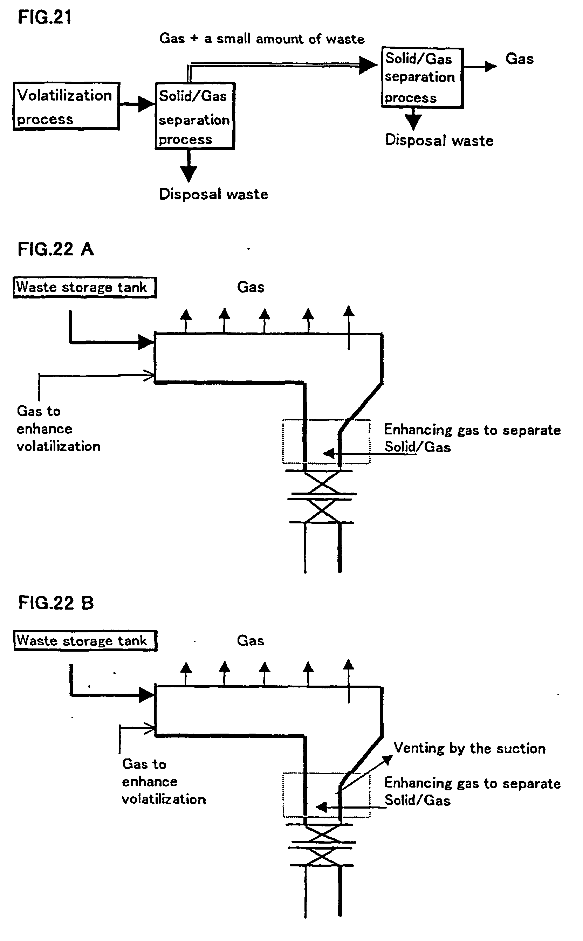

The above-described solid-gas separation may be carried out by combining a separation method such as gravity type, centrifugal type, and impingement type, with a separation method such as electrostatic type and filter type. For example, as shown in FIG. 21, after the toxic organic matter is volatilized from the waste in the volatilization stage, a low efficiency separation is given in the first solid-gas separation stage using a separation method such as gravity type, centrifugal type, and impingement type. Then, a high efficiency separation is given to the gas which was separated in the first solid-gas separation stage and a small amount of waste contained in the gas using a separation method such as electrostatic type and filter type. Through that kind of treatment with combined separation methods, efficient and highly accurate solid-gas separation can be conducted.

During the solid-gas separation of waste and gas containing volatilized toxic organic matter, it is preferable to introduce a gas enhancing the volatilization, such as air, steam, an inert gas such as nitrogen, a gas generated during the detoxification of waste, or their mixed gas. For example, as shown in FIG. 22A and FIG. 22B, by introducing a gas enhancing the volatilization into the waste, the gas containing volatilized toxic organic matter can be expelled. At that moment, as shown in FIG. 22B, it is preferred to apply venting by suction. With the suction venting, further effective expelling of gas containing volatilized toxic organic matter is performed.

A preferred temperature of the region to expel the gas, or the temperature of the region encircled by broken line in FIG. 22A and FIG. 22B is 180°C or below. When the gas expelling is carried out under the temperature condition, the formation of dioxins and toxic organic chlorine compounds is almost perfectly prevented.

The mode to carry out the first embodiment and the second embodiment described above dealt with the detoxification of gas containing volatilized organic matter using gas combustion method, catalytic decomposition method, or catalytic combustion method. The detoxification, however, may be carried out using other methods. Examples of applicable methods include decomposition by contacting with fused material, adsorption, scrubbing, and cooling and condensation, or a combination of these methods.

The treatment of the above-described gas using adsorption is conducted by adjusting the gas temperature to 180°C or below, applying, for example, adsorbing agent blowing and dust removing method, fixed bed adsorption method, moving bed adsorption method, or fluidized bed adsorption method. The adsorbing agent applied to those kinds of methods include straight chain, cyclic, or aromatic hydrocarbons having 18 or more of carbon atoms, organic compounds containing silicon, metallic soap, and materials supporting them.

When the adsorption method is applied to treat the above-described gas, the used adsorbing agent may be treated by mixing with the above-described waste. Alternatively, the used adsorbing agent may be incinerated, or reclaimed to reuse as the adsorbing agent. For reclaiming the adsorbing agent, the toxic substances adsorbed to the adsorbing agent may be disrobed from the adsorbing agent using, for example, an acidic solvent, a basic solvent, or an organic solvent. In that case, since the toxic substances move to the solvent, normally the solvent is needed to be detoxified.

When the treatment of the above-described gas is conducted by scrubbing method or cooling and condensing method, the liquid (scrubbed liquid or condensed liquid) generated by the treatment contains the toxic substances. In that case, the scrubbed liquid and the condensed liquid may be mixed with the waste, which is then detoxified by the above-described methods (excluding the scrubbing method and the cooling and condensing method).

The adsorbed agent, the scrubbed liquid, the condensed liquid used for the treatment of above-described gas, or the solvent applied for reclaiming the used adsorbing agent may be treated by other methods. For example, they may be treated by high temperature oxidation method, ozone decomposition method using ultraviolet light, ultrasonic wave decomposition method using ultraviolet light, or high temperature and high pressure decomposition method.

According to the above-described detoxification methods, continuous monitoring is preferably given on the concentration of halogenide compounds in the detoxified gas. For example, when a catalyst is applied to detoxification treatment, the monitoring can detect the life of the catalyst. When the detoxification is done by combustion method, the variations of combustion performance and other variables are detected. When an adsorbing agent is applied, the monitoring can detect the life of the adsorbing agent. When scrubbing or cooling and condensing is given, the monitoring can detect the changes in the capacity of treatment. As a result, incomplete detoxification is prevented.

As described above, according to the present invention, the detoxification of a waste is carried out by volatilization of toxic organic matter from the waste, and the volatilized toxic organic matter is separately detoxified. Consequently, according to the method of the present invention, the detoxification of a waste is carried out at high degree of freedom, thus allowing to conduct the detoxification of the waste at further high efficiency and low cost. In addition, according to the method of the present invention, since the toxic substances and their cause substances are volatilized and removed, there is very little possibility to generate toxic organic matter before and after the detoxification treatment.

That is, the present invention provides a method for disposing a waste by detoxifying the waste consisting mainly of inorganic components and containing organic matter at a low cost, and a method for disposing a waste which consists mainly of inorganic components and contains organic matter by detoxifying the waste without generating large amount of flue gas and NOx.

**Claims**

1. A method for disposing a waste comprising the steps of:

   volatilizing a toxic organic matter from the waste containing an inorganic matter and the toxic organic matter to generate a gas containing the volatilized toxic organic matter; and

   detoxifying the generated gas containing the volatilized toxic organic matter,

   **characterized in that**
   the waste is an incineration fly ash.

2. The method according to claim 1, further comprising the step of forcefully separating the gas containing the volatilized toxic organic matter from the waste, in between the step of generating the gas containing the toxic organic matter and the step of detoxifying the gas.

3. The method according to claim 2, wherein the step of forcefully separating the gas comprises separating the gas containing the volatilized toxic organic matter from the waste, by using at least one separation-method selected from the group consisting of a gravity method, a centrifugal method, and an impingement method.

4. The method according to claim 1, wherein the step of detoxifying the gas comprises treating the gas, by using at least one method selected from the group consisting of a combustion method, a catalytic combustion method of a moving bed type or a fluidized bed type, a catalytic decomposition method of the moving bed type or the fluidized bed type, an adsorption method, a scrubbing method, and a cooling and condensing method.

5. The method according to claim 4, wherein the step of detoxifying the gas comprises heating the gas to the degree of approximately 500°C or lower temperatures.

6. The method according to claim 1, wherein the step of detoxifying the gas comprises treating the gas, by using at least one method selected from the group consisting of the catalytic combustion method of a fixed bed type under absence of water and the catalytic decomposition method of the fixed bed type under absence of water.

7. The method according to claim 1, wherein the step of volatilizing the toxic organic matter from the waste comprises generating the gas containing the toxic organic matter, while supplying a gas enhancing to volatilize the toxic organic matter.

8. The method according to claim7, wherein the gas enhancing to volatilize the toxic organic matter contains at least one gas selected from the group consisting of an air, a steam, an inorganic gas, a gas generated by heating the waste, and a gas generated accompanied with the detoxification treatment of the waste.

**9.** The method according to claim 1, wherein the step of volatilizing the toxic organic matter from the waste comprises generating the gas, while introducing the gas accompanied with the waste.

**10.** The method according to claim 1, wherein the step of generating the gas containing the volatilized toxic organic matter comprises supplying the waste in a batch-wise mode.

**11.** The method according to claim 1, wherein the step of volatilizing the toxic organic matter from the waste comprises supplying the waste in a continuous mode.

**12.** The method according to claim 1, wherein the waste contains a plural of the toxic organic matter.

**13.** The method according to claim 12, wherein the step of volatilizing the toxic organic matter from the waste comprises:

  sequentially volatilizing a different kinds of the toxic organic matter by varying at least one of volatilization conditions selected from the group consisting of a heating temperature, a pressure, and a retention time; and generating a plural kind of the gas each containing respective volatilized toxic organic matter.

**14.** The method according to claim 1, wherein the step of detoxifying the gas comprises treating the gas under a condition that at least one kind of gas selected from the group consisting of a plural kinds of gases is treated under a different condition from the conditions for treating other gases.

**15.** The method according to claim 1, wherein the step of volatilizing the toxic organic matter from the waste comprises enhancing to volatilize the toxic organic matter by varying the pressure condition.

**16.** The method according to claim 1, wherein the step of volatilizing the toxic organic matter from the waste comprises generating the gas in a plural of vessels which are allocated in series, in parallel, or in series and parallel.

**17.** The method according to claim 1, wherein the waste contains a mercury.

**18.** The method according to claim 17, further comprising the step of recovering the mercury from the waste which contains the mercury.

**19.** The method according to claim 1, wherein the step of volatilizing the toxic organic matter from the waste comprises:

  forming a fluidized bed consisting of the waste by vibrating the waste, and heating the waste in a form of fluidized bed.

**20.** The method according to claim 19, wherein the step of volatilizing the toxic organic matter from the waste comprises:

  forming a fluidized bed consisting of the waste by mechanically vibrating a vessel containing the waste, and heating the waste in a form of fluidized bed.

**21.** The method according to claim 19, wherein the step of volatilizing the toxic organic matter from the waste comprises forming a fluidized bed consisting of the waste, by intermittently introducing the gas into the waste.

**Patentansprüche**

**1.** Verfahren zur Beseitigung von Abfallstoffen, umfassend die Schritte des:

  Verdampfens von toxischen organischen Bestandteilen aus den Abfallstoffen, die anorganische Bestandteile und die toxischen und organischen Bestandteile enthalten, um ein Gas zu erzeugen, welches verdampfte toxische organische Bestandteile enthält; und

  Entgiftung des erzeugten Gases, welches die verdampften toxischen organischen Bestandteile enthält,

  **dadurch gekennzeichnet, dass** die Abfallstoffe Verbrennungs-Flugstäube sind.

**2.** Verfahren gemäß Anspruch 1, des Weiteren umfassend den Schritt des Separierens des Gases, welches die verdampften toxischen organischen Bestandteile enthält, mit Nachdruck von den Abfallstoffen zwischen dem Schritt des Erzeugens des Gases, welches toxische organische Bestandteile enthält, und dem Schritt des Entgiftens des Gases.

**3.** Verfahren gemäß Anspruch 2, wobei der Schritt des Separierens des Gases mit Nachdruck das Separieren des Gases, welches die verdampften toxischen organischen Bestandteile enthält, von den Abfallstoffen unter Verwendung zumindest eines Separations-Verfahrens, welches aus der Gruppe ausgewählt ist, die ein Schwerkraftverfahren, ein Zentrifugal-Verfahren sowie ein Prallverfahren enthält, umfasst.

**4.** Verfahren gemäß Anspruch 1, wobei der Schritt des Entgiftens des Gases die Behandlung des Gases unter Verwendung zumindest eines Verfahrens, welches aus der Gruppe ausgewählt ist, die ein Verbrennungsverfahren, ein katalytisches Verbrennungsverfahren eines Wirbelbett-Typs oder Fluidatbett-Typs, ein katalytisches Zersetzungsverfahren des Wirbelschicht-Typs oder Fluidatbett-Typs, ein Absorptionsverfahren, ein Waschverfahren sowie ein Kühl- und Kondensierverfahren enthält, umfasst.

**5.** Verfahren gemäß Anspruch 4, wobei der Schritt des Entgiftens des Gases die Erhitzung des Gases zu einem Ausmaß von etwa 500°C oder niedrigeren Temperaturen umfasst.

**6.** Verfahren gemäß Anspruch 1, wobei der Schritt des Entgiftens des Gases die Behandlung des Gases unter Verwendung zumindest eines Verfahrens umfasst, welches aus der Gruppe ausgewählt ist, die aus dem katalytischen Verbrennungsverfahren eines Typs mit Festbett unter Abwesenheit von Wasser und des katalytischen Zersetzungsverfahrens eines Typs mit Festbett unter Abwesenheit von Wasser besteht.

**7.** Verfahren gemäß Anspruch 1, wobei der Schritt des Verdampfens der toxischen organischen Bestandteile aus den Abfallstoffen das Erzeugen des Gases umfasst, welches die toxischen organischen Bestandteile enthält, während ein Gas zugeführt wird, welches die Verdampfung der toxischen organischen Bestandteile fördert.

**8.** Verfahren gemäß Anspruch 7, wobei das Gas, welches die Verdampfung der toxischen organischen Bestandteile fördert, zumindest ein Gas enthält, welches aus der Gruppe ausgewählt ist, die aus Luft, einem Dampf, einem anorganischen Gas, einem Gas, welches durch Erhitzen der Abfallstoffe erzeugt wird, sowie einem Gas, welches in Zusammenhang mit der Entgiftungsbehandlung der Abfallstoffe erzeugt wurde, besteht.

**9.** Verfahren gemäß Anspruch 1, wobei der Schritt des Verdampfens der toxischen organischen Bestandteile aus den Abfallstoffen die Erzeugung des Gases umfasst, während das von den Abfallstoffen begleitete Gas eingeführt wird.

**10.** Verfahren gemäß Anspruch 1, wobei der Schritt des Erzeugens des Gases, welches die verdampften toxischen organischen Bestandteile enthält, das chargenweise Zuführen der Abfallstoffe umfasst.

**11.** Verfahren gemäß Anspruch 1, wobei der Schritt des Verdampfens der toxischen organischen Bestandteile aus den Abfallstoffen das kontinuierliche Zuführen der Abfallstoffe umfasst.

**12.** Verfahren gemäß Anspruch 1, wobei die Abfallstoffe eine Vielzahl von toxischen organischen Bestandteilen enthalten.

**13.** Verfahren gemäß Anspruch 12, wobei der Schritt des Verdampfens der toxischen organischen Bestandteile aus den Abfallstoffen umfasst:

sequentielles Verdampfen unterschiedlicher Arten von toxischen organischen Bestandteilen durch Variieren zumindest einer Verdampfungs-Bedingung, die aus der Gruppe ausgewählt ist, die aus einer Aufheiztemperatur, dem Druck sowie der Aufrechterhaltungs-Zeit besteht; und

Erzeugen von vielen Arten von Gasen, die jeweils verdampfte toxische organische Bestandteile enthalten.

**14.** Verfahren gemäß Anspruch 1, wobei der Schritt des Entgiftens des Gases die Behandlung des Gases unter einer Bedingung umfasst, dass zumindest eine Art von Gasen, die aus der Gruppe, welche eine Vielzahl von Gasarten enthält, unter einer von der Behandlung der anderen Gase unterschiedlichen Bedingungen behandelt wird.

**15.** Verfahren gemäß Anspruch 1, wobei der Schritt des Verdampfens der toxischen organischen Bestandteile aus den Abfallstoffen die Förderung der Verdampfung der toxischen organischen Bestandteile durch Variieren der Druckbedingung umfasst.

**16.** Verfahren gemäß Anspruch 1, wobei der Schritt des Verdampfens der toxischen organischen Bestandteile aus den Abfallstoffen das Erzeugen des Gases in einer Vielzahl von Behältern umfasst, die in Reihe, parallel oder in Reihe und parallel angeordnet sind.

**17.** Verfahren gemäß Anspruch 1, wobei die Abfallstoffe Quecksilber enthalten.

**18.** Verfahren gemäß Anspruch 17, des Weiteren umfassend den Schritt des Wiedergewinnens des Quecksilbers aus den Abfallstoffen, die Quecksilber enthalten.

**19.** Verfahren gemäß Anspruch 1, wobei der Schritt des Verdampfens der toxischen organischen Bestandteile aus den Abfallstoffen umfasst:

Ausbilden eines Fluidatbetts, welches aus den Abfallstoffen besteht, durch Vibrieren der Abfallstoffe, und

Aufheizen der Abfallstoffe in einer Fluidatbett-Form.

20. Verfahren gemäß Anspruch 19, wobei der Schritt des Verdampfens der toxischen organischen Bestandteile aus den Abfallstoffen umfasst:

Ausbilden eines Fluidatbetts, welches aus den Abfallstoffen besteht, durch mechanisches Vibrieren eines Behälters, der die Abfallstoffe enthält, sowie Aufheizen der Abfallstoffe in einer Fluidatbett-Form.

21. Verfahren gemäß Anspruch 19, wobei der Schritt des Verdampfens der toxischen organischen Bestandteile aus den Abfallstoffen das Ausbilden eines Fluidatbetts umfasst, welches aus den Abfallstoffen besteht, durch periodisches Einführen des Gases in die Abfallstoffe.


## Revendications

1. Procédé pour éliminer des déchets comprenant les étapes consistant à :

faire volatiliser une matière organique toxique à partir des déchets contenant une matière inorganique et la matière organique toxique pour générer un gaz contenant la matière organique toxique volatilisée ; et

rendre non toxique les gaz générés contenant la matière organique toxique volatilisée,

**caractérisé en ce que**
les déchets sont des cendres volantes d'incinération.

2. Procédé selon la revendication 1, comprenant, en outre, l'étape consistant à séparer de force le gaz contenant la matière organique toxique volatilisée des déchets, entre l'étape de génération de gaz contenant la matière organique toxique et l'étape consistant à rendre non toxique le gaz.

3. Procédé selon la revendication 2, dans lequel l'étape consistant à séparer de force le gaz comprend la séparation du gaz contenant la matière organique toxique volatilisée des déchets, en utilisant au moins un procédé de séparation sélectionné dans le groupe qui est constitué d'un procédé par gravité, un procédé centrifuge et un procédé de collision.

4. Procédé selon la revendication 1, dans lequel l'étape consistant à rendre non toxique le gaz comprend le traitement du gaz, en utilisant au moins un procédé choisi dans le groupe qui est constitué d'un procédé de combustion, d'un procédé de combustion catalytique du type à lit mobile ou du type à lit fluidisé, d'un procédé de décomposition catalytique du type à lit mobile ou du type à lit fluidisé, et d'un procédé d'adsorption, d'un procédé de lavage et d'un procédé de refroidissement et de condensation.

5. Procédé selon la revendication 4, dans lequel l'étape consistant à rendre non toxique le gaz comprend le chauffage du gaz à un degré d'approximativement 500°C ou de températures inférieures.

6. Procédé selon la revendication 1, dans lequel l'étape consistant à rendre non toxique le gaz comprend le traitement du gaz, en utilisant au moins un procédé choisi dans le groupe qui est constitué du procédé de combustion catalytique du type à lit fixe en absence d'eau et du procédé de décomposition catalytique du type à lit fixe en absence d'eau.

7. Procédé selon la revendication 1, dans lequel l'étape consistant à faire volatiliser la matière organique toxique depuis les déchets comprend la génération du gaz contenant la matière organique toxique, tout en fournissant un gaz pour accentuer l'effet de volatilisation de la matière organique toxique.

8. Procédé selon la revendication 7, dans lequel le gaz ayant pour effet d'améliorer la volatilisation de la matière organique toxique contient au moins un gaz choisi dans le groupe qui est constitué de l'air, de la vapeur, d'un gaz inorganique, d'un gaz généré par le chauffage de déchets, et d'un gaz généré associé au traitement pour rendre non toxique les déchets.

9. Procédé selon la revendication 1, dans lequel l'étape consistant à rendre volatile la matière organique toxique depuis les déchets comprend une génération du gaz, tout en introduisant le gaz associé aux déchets.

10. Procédé selon la revendication 1, dans lequel l'étape consistant à générer le gaz contenant la matière organique toxique volatilisée comprend la fourniture des déchets en mode discontinu.

11. Procédé selon la revendication 1, dans lequel l'étape consistant à rendre volatile la matière organique toxique à partir de déchets comprend la fourniture de déchets en mode continu.

12. Procédé selon la revendication 1, dans lequel les déchets contiennent une pluralité de matières organiques toxiques.

**13.** Procédé selon la revendication 12, dans lequel l'étape consistant à rendre volatile la matière organique toxique depuis les déchets comprend les étapes consistant à :

rendre séquentiellement volatiles des genres différents de matière organique toxique en faisant varier au moins une des conditions de volatilisation choisie dans le groupe qui est constitué de la température de chauffage, de la pression et d'un temps de rétention ; et générer plusieurs genres de gaz contenant chacun une matière organique toxique volatilisée respective.

**14.** Procédé selon la revendication 1, dans lequel l'étape consistant à rendre non toxique le gaz comprend le traitement du gaz dans une condition où au moins un genre du gaz choisi dans le groupe constitué de plusieurs genres de gaz est traité dans une condition différente des conditions pour le traitement des autres gaz.

**15.** Procédé selon la revendication 1, dans lequel l'étape consistant à rendre volatile la matière organique toxique à partir de déchets comprend l'effet d'améliorer la volatilisation de la matière organique toxique en faisant varier la condition de pression.

**16.** Procédé selon la revendication 1, dans lequel l'étape consistant à rendre volatile la matière organique toxique à partir de déchets comprend la génération de gaz dans une pluralité de cuves qui sont affectées en série, en parallèle, ou en série et parallèles.

**17.** Procédé selon la revendication 1, dans lequel les déchets contiennent du mercure.

**18.** Procédé selon la revendication 17, comprenant, en outre, l'étape consistant à récupérer le mercure à partir des déchets qui contient du mercure.

**19.** Procédé selon la revendication 1, dans lequel l'étape consistant à rendre volatile la matière organique toxique à partir des déchets comprend les étapes consistant à :

former un lit fluidisé qui est constitué de déchets en faisant vibrer les déchets, et

chauffer les déchets sous une forme de lit fluidisé.

**20.** Procédé selon la revendication 19, dans lequel l'étapes consistant à rendre volatile la matière organique toxique à partir des déchets comprend les étapes consistant à :

former un lit fluidisé qui est constitué de déchets en faisant vibrer mécaniquement une cuve contenant les déchets, et chauffer les déchets sous une forme d'un lit fluidisé.

**21.** Procédé selon la revendication 19, dans lequel l'étape consistant à rendre volatile la matière organique toxique à partir de déchets comprend la formation d'un lit fluidisé qui est constitué de déchets, en introduisant de manière intermittente le gaz dans les déchets.

EP 1 048 366 B1

## FIG. 1

## FIG. 2

17

## FIG.3

Gas to enhance the volatilization

1 — Waste storage tank

Incinerator — 3

Agent for preventing generation of halogen gas

Mixer — 5

Volatilization tank — 2

Disposal waste

## FIG.4

Gas to enhance the volatilization

1 — Waste storage tank

Incinerator — 3

Agent for preventing generation of halogen gas

Dust collector — 4

Mixer — 5

Volatilization tank — 2

Disposal waste

18

## FIG.5

Gas to enhance the volatilization

```
Waste disposal tank          Incinerator ──── 3

1

        ┌──── 7
        Activated                      Dust ──── 4
        carbon                         collector
        tower

             ┌── 6
        Preparatory              Volatilization tank
        volatilization           350°C or more ──── 2
        tank
        200°C or less                Disposal waste
```

## FIG.6

Gas to enhance the volatilization

```
Waste disposal tank          Incinerator ──── 3

1

    ──── Agent for preventing
         generation of halogen gas
         ┌──── 7
        Activated                      Dust ──── 4
        carbon tower                   collector

             ┌── 6
    Mixer                        Volatilization tank
5       Preparatory              350°C or more ──── 2
        volatilization
        tank                         Disposal waste
        100°C or less

Gas to enhance the
volatilization
```

**FIG. 7**

**FIG. 8**

## FIG. 9

## FIG. 10

## FIG.11

Waste storage tank

1

Gas  Gas  Gas
(1)   (2)   (3)

Volatilization tank

2

Gas to  enhance
volatilization

Disposal waste

## FIG.12

Gas(1)     Gas(2)     Gas(3)

I          II          III

Temperature

Heating Time

## FIG.13 A

Gas(1)　Gas(2)　Gas(3)

1 — Waste storage tank

Gas to　enhance
volatilization

2

Disposal waste

Temperature

Heating Time

## FIG.13 B

Gas(1)　Gas(2)　Gas(3)

1 — Waste storage tank

Gas to　enhance
volatilization

2

Disposal waste

Gas to enhance
volatilization

Gas to enhance
volatilization

FIG.14

FIG.15

## FIG.16

```
              1      Gas(1)           Gas(2)           Gas(3)           Gas(N)
                2
    Waste           Volatilization   Volatilization   Volatilization   Volatilization   Disposal
    storage         tank (1)         tank (2)         tank (3)         tank (N)         waste
    tank

                     Gas( α )

    Waste           Volatilization
    storage         tank( α )
    tank

                     Gas(a)           Gas (b)

    Waste           Volatilization   Volatilization
    storage         tank (a)         tank (b)
    tank
```

## FIG.17

```
              1      Gas(1)           Gas(2)           Gas(3)           Gas(n)
                2
    Waste           Volatilization   Volatilization   Volatilization   Volatilization   Disposal
    storage         tank (1)         tank (2)         tank (3)         tank (n)         waste
    tank

                     Gas( α )         Gas( β )         Gas( γ )         Gas(N)

    Waste           Volatilization   Volatilization   Volatilization   Volatilization   Disposal
    storage         tank( α )        tank( β )        tank( γ )        tank(N)          waste
    tank
```

FIG. 18 A

FIG. 18 B

FIG. 18 C

**FIG.19**

FIG.20  A

FIG.20 B

FIG.20 C

## FIG.21

Gas + a small amount of waste

Volatilization process → Solid/Gas separation process → Solid/Gas separation process → Gas

Disposal waste

Disposal waste

## FIG.22 A

Waste storage tank

Gas

Gas to enhance volatilization

Enhancing gas to separate Solid/Gas

## FIG.22 B

Waste storage tank

Gas

Gas to enhance volatilization

Venting by the suction

Enhancing gas to separate Solid/Gas